# EUROPEAN PATENT APPLICATION

(11) **EP 4 783 570 A1**
(43) Date of publication of application: **29.07.2026**
(21) Application number: 24867429.3
(22) Date of filing: 18.09.2024
(51) Int. Cl.: H04N 7/15

(54) **VIDEO CONFERENCE POLLING OPERATION METHOD AND APPARATUS, AND ELECTRONIC DEVICE AND STORAGE MEDIUM**

(30) Priority: 19.09.2023 CN 202311215074
(71) Applicant: CHINA MOBILE COMMUNICATIONS GROUP CO., LTD., Beijing 100032 (CN)
(72) Inventor: LIU, Jia, Beijing 100032 (CN); SHENG, Yun, Beijing 100032 (CN); WANG, Bailin, Beijing 100032 (CN); JIA, Xiaohui, Beijing 100032 (CN); ZHENG, Qingyi, Beijing 100032 (CN)
(74) Representative: Herrero & Asociados, S.L.
(86) International application number: PCT/CN2024/119349
(87) International publication number: WO 2025/061021

(57) **Abstract**

Disclosed in the present application are a video conference polling operation method and apparatus, and an electronic device and a storage medium. The method comprises: acquiring monitoring information of at least one video conference terminal; updating polling operation information on the basis of the monitoring information; and operating a related video conference terminal among the at least one video conference terminal on the basis of the updated polling operation information.

## Description

### CROSS REFERENCE TO RELATED APPLICATIONS

The present disclosure claims foreign priority to Chinese Patent Application No. 202311215074.2, filed on September 19, 2023, the contents of which are hereby incorporated by reference in its entirety.

### TECHNICAL FIELD

The present disclosure relates to the technical field of video conference technologies, and in particular to a video conference polling operation method, an apparatus, an electronic device, and a storage medium.

### BACKGROUND

A video conference system is a conference system capable of achieving multi-venue and multi-participant participation. People at different locations may hold a conference via the video conference system. In current video conference polling scenarios, in a case where a conference venue order becomes chaotic, the system only supports reminding the chaotic venue to pay attention to venue order, and cannot effectively perform polling control.

### SUMMARY

Embodiments of the present disclosure provide a video conference polling operation method, an apparatus, an electronic device, and a storage medium, to solve a problem in the related art that, in a video conference polling scenario, in a case where a conference venue order becomes chaotic, only reminding the chaotic venue to pay attention to venue order is supported, and polling control cannot be effectively performed.

The technical solution of the present disclosure is implemented as follows.

A video conference polling operation method is provided and includes: acquiring monitoring information for at least one video conference terminal; updating polling operation information based on the monitoring information; and operating a relevant video conference terminal of the at least one video conference terminal based on the updated polling operation information.

A video conference polling operation apparatus is provided and includes: an acquisition module, configured to: acquire monitoring information for at least one video conference terminal; a processing module, configured to: update polling operation information based on the monitoring information; and a reminding module, configured to: operate a relevant video conference terminal of the at least one video conference terminal based on the updated polling operation information.

An electronic device is provided and includes a processor and a memory. The memory is configured to store a computer program, the processor is configured to call and run the computer program stored in the memory to perform the above video conference polling operation method.

A storage medium is provided and stores one or more programs. The one or more programs are executable by one or more processors to implement the above video conference polling operation method.

The video conference polling operation method in the present disclosure includes acquiring monitoring information for at least one video conference terminal; updating polling operation information based on the monitoring information; and operating a relevant video conference terminal of the at least one video conference terminal based on the updated polling operation information. It can be seen that, a real-time dynamic adjustment may be performed based on the monitoring information for at least one video conference terminal, thereby achieving autonomous update of the polling operation information, and achieving the purpose of dynamic overall control of video conference polling.

### BRIEF DESCRIPTION OF THE DRAWINGS

FIG. 1 is a schematic diagram of a video conference scenario according to some embodiments of the present disclosure.
FIG. 2 is a schematic flowchart of a video conference polling operation method according to some embodiments of the present disclosure.
FIG. 3 is a schematic diagram of a setting interface for a polling time interval and/or polling sequence according to some embodiments of the present disclosure.
FIG. 4 is a schematic diagram of a human-computer interaction interface according to some embodiments of the present disclosure.
FIG. 5 is a schematic diagram of a human-computer interaction interface according to some embodiments of the present disclosure.
FIG. 6 is a schematic flowchart of a video conference polling operation method according to some embodiments of the present disclosure.
FIG. 7 is a schematic flowchart of a video conference polling operation method according to some embodiments of the present disclosure.
FIG. 8 is a structural schematic view of a video conference polling operation apparatus according to some embodiments of the present disclosure.
FIG. 9 is a structural schematic view of an electronic device according to some embodiments of the present disclosure.

### DETAILED DESCRIPTION

The technical solutions in embodiments of the present disclosure will be clearly and completely described below with reference to the accompanying drawings in the embodiments of the present disclosure.

It should be understood that the "some embodiments of the present disclosure" or "aforementioned embodiments" in the description mean that a particular feature, structure, or characteristic related to the embodiments is included in at least one embodiment of the present disclosure. Therefore, the phrases "some embodiments of the present disclosure" or "aforementioned embodiment" in the description are not necessarily referring to the same embodiment. Furthermore, the particular feature, structure, or characteristic may be combined in any suitable manner in one or more embodiments. In various embodiments of the present disclosure, the sequence numbers of the processes do not imply the performing sequence, which should be determined by their functions and internal logic, and should not constitute any limitation on the implementation process of the embodiments of the present disclosure. The sequence numbers of the embodiments of the present disclosure are merely for description and do not represent the superiority or inferiority of the embodiments.

A video conference polling operation method according to some embodiments of the present disclosure may be performed by a video conference terminal alone, performed by a server alone, performed by a server and a video conference terminal collaboratively, or performed by multiple video conference terminals collaboratively.

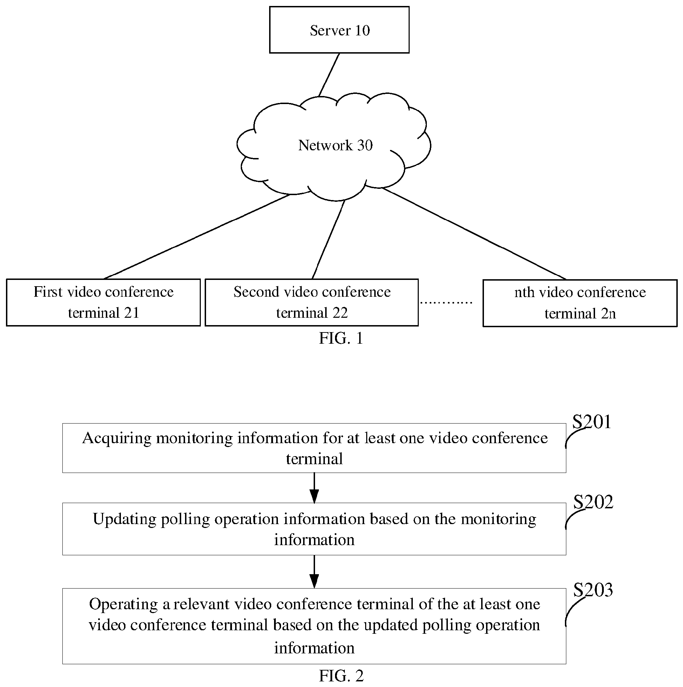

As shown in FIG. 1, in a video conference scenario, a server 10 may be connected to at least one video conference terminal (including a first video conference terminal 21, a second video conference terminal 22, ..., an nth video conference terminal 2n) via a network 30, where n is a positive integer greater than or equal to 1.

The video conference of the present disclosure may include but is not limited to a network conference. The network conference may adopt an interactive mode using the network as a communication medium, and multimedia data such as audio and video of conference participants may be synchronized in real time to the video conference terminal used by a conference initiator and other video conference terminals used by other participants, thereby breaking through the communication limitations caused by spatial distance between participants.

The network 30 may serve as a medium for communication between the server 10 and the multiple video conference terminals, and may be a wide area network or a local area network, or a combination thereof.

During the video conference, the server 10 may be configured to separately or simultaneously send multimedia data of the network conference (including but not limited to video data, audio data, text data) to all video conference terminals associated with the conference initiator.

In some embodiments of the present disclosure, a client may run on each video conference terminal, may be configured to receive the multimedia data of the network conference sent by the server 10, and may display the content of the network conference in a human-computer interaction interface based on the received multimedia data.

In some embodiments of the present disclosure, the client may be configured to display a reminder message editing entry in the human-computer interaction interface, so that in a case where any user of the conference initiator and the participants wants to express an opinion regarding the content of the network conference, the user may perform a reminder message editing operation in the reminder message editing entry displayed in the human-computer interaction interface, input the reminder message that the user want to send, and click a send button after completing the reminder message editing operation. Subsequently, in response to the reminder message sending operation, the client may send the reminder message input by the conference initiator or the participant to the server 10, so that after receiving the reminder message, the server 10 may at least send the received reminder message to the video conference terminal associated with the reminded object, thereby displaying the reminder message in the human-computer interaction interface of the client running on the video conference terminal associated with the reminded object.

As shown in FIG. 2, the video conference polling operation method according to some embodiments of the present disclosure may include the following operations.

An operation 201 includes: acquiring monitoring information for at least one video conference terminal.

In some embodiments of the present disclosure, the monitoring information may be acquired from each video conference terminal or a first video conference terminal of the at least one video conference terminal. The authority of the participant associated with the first video conference terminal is greater than the authority of the participants associated with other video conference terminals. For example, the participant associated with the first video conference terminal is the conference initiator or the conference moderator.

An operation 202 includes: updating polling operation information based on the monitoring information.

In some embodiments of the present disclosure, the polling operation information may include polling control information and/or polling reminder information.

At least one of the polling control information and the polling reminder information included in the polling operation information before update is different from that included in the polling operation information after update.

In some embodiments of the present disclosure, in a case where the monitoring information provided by a video conference terminal satisfies a trigger condition, or in a case where the monitoring information provided by the first video conference terminal satisfies the trigger condition, autonomous update of the preset polling operation information may be triggered timely to acquire updated polling operation information, so as to respond timely and flexibly to conference events satisfying the trigger condition.

An operation 203 includes: operating a relevant video conference terminal of the at least one video conference terminal based on the updated polling operation information.

In some embodiments of the present disclosure, the polling control information may be configured to perform conference-related control on at least one of the at least one video conference terminal. The polling reminder information may be configured to perform conference-related reminding on at least one of the at least one video conference terminal.

For example, in a video conference, the relevant video conference terminal, i.e., an object to be controlled and/or reminded, may be determined based on the monitoring information. In this video conference scenario, in a case where the monitoring information satisfying the trigger condition is acquired from a certain video conference terminal, the relevant video conference terminal may include the certain video conference terminal, and the certain video conference terminal may serve as the object to be controlled and/or reminded; or the relevant video conference terminal may include all video conference terminals, so that all video conference terminals may serve as objects to be controlled and/or reminded.

For example, in a video conference, the relevant video conference terminal, i.e., the object to be controlled and/or reminded, may be determined by the first video conference terminal. In this video conference scenario, in a case where the monitoring information satisfying the trigger condition is acquired from the first video conference terminal, the relevant video conference terminal may include the object to be controlled and/or reminded that is determined by the first video conference terminal. In this reminding scenario, the object to be controlled and/or reminded may be determined by the first video conference terminal.

That is to say, in some embodiments of the present disclosure, in a case where the monitoring information satisfies the trigger condition, the polling operation information may be adjusted dynamically in real time, thereby achieving autonomous update of the polling control information and/or polling reminder information. In this way, not only timely reminder may be achieved, but optimization for polling reminder for other venues may also be achieved, enabling the relevant video conference terminal, i.e., the relevant venue, to receive reminder and/or control timely, thereby achieving the purpose of dynamic overall control of video conference polling.

The video conference polling operation method according to some embodiments of the present disclosure may include acquiring monitoring information for at least one video conference terminal; updating polling operation information based on the monitoring information; and operating a relevant video conference terminal of the at least one video conference terminal based on the updated polling operation information. It may be seen that the present disclosure may achieve autonomous update of polling operation information, thereby achieving the purpose of dynamic overall control of video conference polling.

In some embodiments of the present disclosure, polling setting information may be acquired. The polling setting information may be acquired from a server or a video conference terminal. The polling setting information may be configured to adjust and control the multi-party collaborative conference for all video conference terminals participating in the video conference.

The video conference polling operation method according to some embodiments of the present disclosure may include: acquiring the polling setting information and the monitoring information for the at least one video conference terminal; in a case where the monitoring information satisfies the trigger condition, updating the polling operation information based on the polling setting information to acquire the updated polling operation information, and at least one of the polling control information and the polling reminder information included in the polling operation information being different from that included in the updated polling operation information; and controlling and/or reminding the relevant video conference terminal of the at least one video conference terminal based on the polling control information included in the updated polling operation information and/or the polling reminder information included in the updated polling operation information. It may be seen that, in some embodiments of the present disclosure, in a case where it is determined that the monitoring information satisfies the trigger condition, real-time dynamic adjustment may be performed, thereby achieving autonomous update of polling control information and/or polling reminder information, and achieving the purpose of dynamic overall control of video conference polling.

In some embodiments of the present disclosure, the polling setting information may include a polling time interval and/or a polling sequence of the at least one video conference terminal.

The polling time interval may be a fixed time interval or a dynamic time interval. The fixed time interval may be set for this video conference, or generated based on conference information for historical video conferences.

For example, in a case where the polling time interval for the at least one video conference terminal is fixed at 30s, based on the polling sequence, after a video conference terminal is displayed for 30s, a next video conference terminal may be displayed.

The polling sequence may include but is not limited to a sequence for polling speaking and/or displaying for the at least one video conference terminal. The polling sequence may be automatically generated by the video conference terminal or the server, or may be user-defined. The automatic generation may be based on rules of machine learning. During the machine learning process, the polling sequence may be generated by combining attribute information of participants. The attribute information may include but is not limited to an organization name, a group name of a group, and a geographical location.

For example, in a case where the at least one video conference terminal is sequenced based on organization names, in a multi-organization video conference, the at least one video conference terminal is sequenced based on the alphabetical sequence of the first letter of the organization names from A to Z, and a fixed time interval is 30s, after the terminal with the organization name with the first letter A displays for 30s, the terminal the organization name with the first letter B displays, and so on.

For example, the at least one video conference terminal may be classified into multiple levels of groups and then perform polling display. For example, the at least one video conference terminal may be grouped based on areas or interests, etc., and then the video conference terminals in the same group may perform polling display based on a certain rule sequence. For example, each group may serve as a unit, the video conference terminals in the same group may be displayed simultaneously, in which case the polling is performed by groups.

For example, the polling sequence may be set based on the classification of geographical areas. In a national video conference, based on the geographical areas of the Internet protocol addresses (IPs) of the video conference terminals, polling may be performed by groups such as North China, East China, Central China, South China, Southwest, Northeast, and Northwest, etc., and terminals in the same group may be displayed simultaneously. Each level of grouping method may be automatically generated, or may be set by the user, or a combination of automatic generation and user setting. For example, in a national video conference, the video conference terminals may be at least classified into a group at a first level and a group at a second level. The group at the first level may be classified based on geographical area. In the group at the second level, the organizations in the same geographical area may be sequenced by organization names. During polling display, the conference terminals in a first group may be displayed in sequence first based on the organization name sequence for the first group, then the conference terminals in a second group may be displayed in sequence based on the organization name sequence for the second group, and so on.

It should be noted that, in practical applications, the polling setting information for the at least one video conference terminal, such as the polling time interval and/or the polling sequence, may be set based on the actual needs of the video conference.

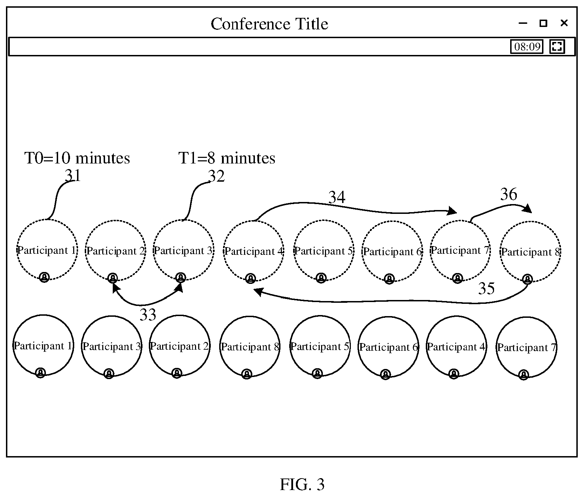

In some embodiments, the polling time interval and/or the polling sequence may be generated by the terminal used by the conference moderator. As shown in FIG. 3, identifiers of all participants may be displayed on the human-computer interaction interface of the terminal used by the conference moderator, and the sequence between the identifiers may be moved to set the polling sequence. In some embodiments of the present disclosure, the polling time interval between all participants may be uniformly set. In some embodiments, the polling time interval between any two participants may be individually set.

For example, in FIG. 3, the dashed-line boxes are participant identifiers for participant 1 to participant 8. Clicking the identifier of the participant ranked first (the dashed-line box 31 in FIG. 3 is ranked first) may trigger the uniform setting of the polling time interval between all participants, for example, T0=10 minutes. In a case where the polling time interval between two participants is needed to be individually set, the identifier of the latter one (the dashed-line box 32 in FIG. 3 is the identifier of the latter participant 3) may be clicked, for example, participant 3 is ranked after participant 2. In this case, clicking participant 3 may trigger the individual setting of the polling time interval between participant 3 and participant 2, for example, T1=8 minutes. For example, in FIG. 3, by a first operation 33 (clicking the identifier of participant 2 for a duration greater than a first duration, after a particular time interval, clicking the identifier of participant 3 for a duration greater than the first duration), the positions of participant 2 and participant 3 may be swapped. The identifier of participant 4 may be dragged near participant 7 via a second operation 34, the identifier of participant 8 may be dragged near participant 4 via a third operation 35, the identifier of participant 7 may be dragged near participant 8 via a fourth operation 36, so that the polling sequence may be changed. Combined with FIG. 3, it may be seen that the polling time interval acquired from this setting is 8 minutes between participant 3 and participant 2, and 10 minutes between other participants. The polling sequence acquired from this setting is participant 1, participant 3, participant 2, participant 8, participant 5, participant 6, participant 4, participant 7. In FIG. 3, the participant identifiers with dashed-line boxes are intended to reflect the polling sequence before setting, and the participant identifiers with solid line boxes are intended to reflect the polling sequence after setting. The participant identifiers with dashed-line boxes and the participant identifiers with solid line boxes may be displayed on the same interface or on different interfaces, which is not limited in the present disclosure.

It should be noted that the present disclosure does not limit the method for setting/changing the polling time interval and the method for setting/changing the polling sequence.

In some embodiments of the present disclosure, in a case where the monitoring information satisfies the trigger condition, the preset polling operation information may be timely and autonomously updated based on the polling setting information to acquire the updated polling operation information. In this way, the method may not only respond timely and flexibly to conference events satisfying the trigger condition, but also achieve accurate update of the polling operation information.

In some embodiments of the present disclosure, the monitoring information may include control information sent by a first video conference terminal of the at least one video conference terminal to a second video conference terminal.

In some embodiments of the present disclosure, the authority of the first video conference terminal is greater than that of the second video conference terminal. For example, the first video conference terminal may be the terminal used by the conference initiator/moderator.

During a video conference, in a case of intervention by the conference initiator/moderator, the conference initiator/moderator may perform a control operation on the second video conference terminal via the first video conference terminal, i.e., the conference initiator/moderator may send corresponding control information to the second video conference terminal, thereby triggering autonomous update of the polling operation information.

In this embodiment, the first video conference terminal, i.e., the video conference terminal in the main venue, may control video conference terminals in other venues. In a case where the video conference terminal in the main venue intervenes in control and/or reminder, the sent control information may serve as one type of monitoring information.

In some embodiments of the present disclosure, the operation 201 of acquiring monitoring information for at least one video conference terminal may be implemented through the following operations:
in a case where prompt information displayed on a display interface of a first video conference terminal is selected, acquiring control information sent by the first video conference terminal to a second video conference terminal based on the prompt information;
the prompt information may be configured to prompt a conference scenario of the second video conference terminal, and the monitoring information may include the control information;

In some embodiments of the present disclosure, a client of the first video conference terminal may display the prompt information for other video conference terminals in a human-computer interaction interface. In some embodiments, there is a one-to-one mapping relationship between the prompt information and the control information. In some embodiments of the present disclosure, the control information mapped one-to-one with the prompt information may be preestablished based on a keyword of the prompt information.

In some embodiments of the present disclosure, the operation 202 of updating polling operation information based on the monitoring information may be implemented through the following operations:
in a case where an information type of the control information belongs to a preset information type, acquiring polling setting information for the at least one video conference terminal; and updating the polling operation information base on the polling setting information.

For example, the preset information type may include but is not limited to removing from the conference, and stopping sharing the shared content. Stopping sharing the shared content may be configured to reduce information leakage.

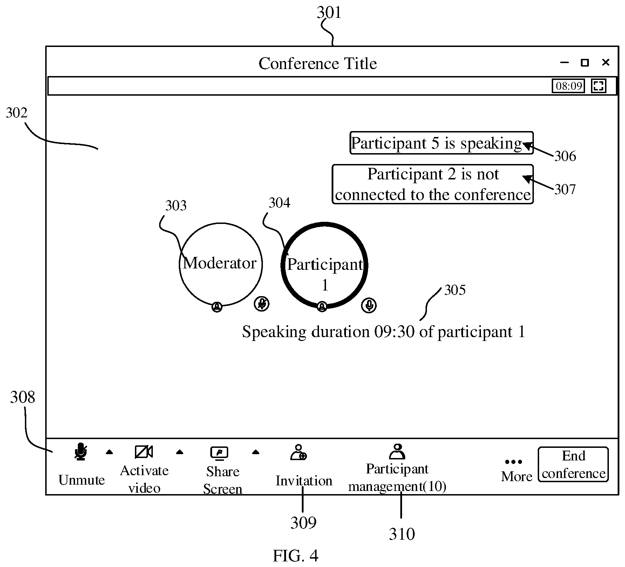

In an achievable scenario, as shown in FIG. 4, a first human-computer interaction interface 301 of the client of the first video conference terminal may include a first conference display area 302 and a first conference toolbar 308. The first conference display area 302 may display at least one of: shared content (not shown in the figure) of participant 1 who is speaking, an identifier 303 of the moderator associated with the first video conference terminal, an identifier 304 of participant 1 who is speaking, a speaking duration (e.g., 09:30) 305 of participant 1. In some embodiments of the present disclosure, the first human-computer interaction interface 301 may display prompt information for other video conference terminals, and display the prompt information for other video conference terminals on the first conference display area 302 in the form of a pop-up box or a fixed window (not shown in the figure). For example, a first pop-up box 306 may display the prompt information for participant 5, i.e., participant 5 is speaking. A second pop-up box 307 may display the prompt information for participant 2, i.e., participant 2 is not connected to the conference.

In some embodiments, the first conference toolbar 308 may include multiple conference management tools. For example, the first conference toolbar 308 may include a participant invitation 309, and the moderator may trigger this tool to invite a new participant to join the conference. For example, the first conference toolbar 308 may include a participant management 310, and the moderator may trigger this tool to manage participants who have already joined, such as removing from the conference and/or sending related prompt information. It should be noted that sending prompt information via the participant management 310 is required to trigger the participant management 310, display a participant list, click an identifier of a prompted object, enter a dialogue interface corresponding to the prompted object, manually input the prompt information, and finally click send, so that the prompt information may be sent to the prompted object.

However, in some embodiments of the present disclosure, in a case where the prompt information displayed on the display interface (e.g., the first human-computer interaction interface 301) of the first video conference terminal is selected, the first video conference terminal sending corresponding control information to the second video conference terminal based on the selected prompt information may be triggered. In example 1, in a case where the prompt information "participant 5 is speaking" displayed in the first pop-up box 306 is selected, the first video conference terminal sending control information "turning off the microphone of participant 5" to the second video conference terminal based on the selected prompt information may be triggered. Thus, after receiving this control information, the second video conference terminal may respond by turning off the microphone of participant 5. In example 2, in a case where the prompt information "participant 2 is not connected to the conference" displayed in the second pop-up box 307 is selected, the first video conference terminal sending control information "removing from the conference" to the second video conference terminal based on the selected prompt information may be triggered. Thus, after receiving this control information, the second video conference terminal may respond by exiting the conference. In this way, timely response may be made to conference events in the video conference scenario that satisfy the trigger condition (the monitoring information satisfying the trigger condition may include that the information type of the control information belongs to the preset information type), thereby simplifying the intervention operation of the moderator, quickly and accurately solving the unexpected situation, improving the response efficiency for the particular conference event while maintaining the smooth progress of the multi-party video conference.

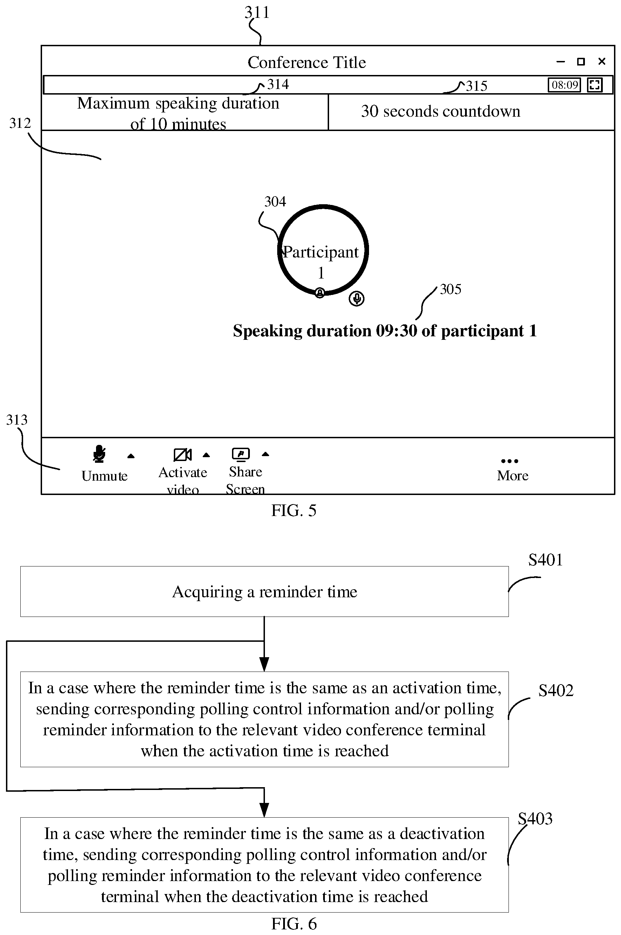

In an achievable scenario, as shown in FIG. 5, a second human-computer interaction interface 311 of the client of the second video conference terminal may include a second conference display area 312 and a second conference toolbar 313. The second conference display area 312 may display at least one of: shared content (not shown in the figure) of participant 1 who is speaking, an identifier 304 of participant 1 who is speaking, and a speaking duration (e.g., 09:30) 305 of participant 1. In a case where the speaking duration satisfies a prompt condition, a prompt may be performed on the second human-computer interaction interface 311 of the client of the second video conference terminal. For example, in a case where the speaking duration is greater than a duration threshold, at least one of the following prompts may be performed: highlighting the speaking duration 305 (in FIG. 5, bold font represents highlighting, the present disclosure does not limit the highlighting method) of participant 1, prompting the maximum speaking duration (e.g., maximum speaking duration of 10 minutes) set by the moderator in a fixed window 314, prompting how much duration (e.g., 30 seconds countdown) is left from the current speaking duration to the maximum speaking duration in a fixed window one 315. In some embodiments, the prompt may be performed in other methods on the second human-computer interaction interface 311, such as prompting via a pop-up window, the present disclosure does not limit the method of prompt.

In some embodiments of the present disclosure, combining with example 1, in a case where the first video conference terminal sends the control information "turning off the microphone of participant 5" to the second video conference terminal based on the selected prompt information, it is determined that the information type of this control information does not belong to the preset information type. In this case, autonomous update of the polling operation information may be not triggered. In some embodiments, control information not belonging to the preset information type may include others, such as turning off the camera.

Combining with example 2, in a case where the first video conference terminal sends the control information "removing from the conference" to the second video conference terminal based on the selected prompt information, it is determined that the information type of this control information belongs to the preset information type, thereby triggering autonomous update of the polling operation information.

In some embodiments of the present disclosure, the monitoring information may include feature information acquired by the at least one video conference terminal monitoring a respective conference scenario.

In some embodiments of the present disclosure, the at least one video conference terminal may monitor the respective conference scenario to provide feature information acquired from the respective conference scenario. The monitoring device/component may include but is not limited to a camera and a microphone in each venue. It should be noted that the feature information may be information acquired by processing a signal collected by the monitoring device/component, or information acquired by the monitoring device/component collecting the signal and sending it to the video conference terminal/server for processing. It may be seen that, in some embodiments of the present disclosure, the feature information monitored in real-time in each venue may be fed back timely. In a case where the feature information satisfies a corresponding trigger condition, autonomous update of polling operation information may be triggered, thereby achieving dynamic overall control of video conference polling.

In some embodiments of the present disclosure, the operation 201 of acquiring monitoring information for at least one video conference terminal may be implemented through the following operations:
acquiring multimedia information acquired by the at least one video conference terminal monitoring a respective conference scenario; and
performing feature extraction on the multimedia information, and acquiring at least one of the following feature information: a voice feature, a semantic feature, a body movement feature, and a facial feature.

The multimedia information may include but is not limited to audio information and video information.

In some embodiments of the present disclosure, the operation 202 of updating polling operation information based on the monitoring information may be implemented through the following operations:
in a case where the monitoring information satisfies a trigger condition, acquiring polling setting information for the at least one video conference terminal; and
updating the polling operation information based on the polling setting information.

The trigger condition may include at least one of the following: the voice feature satisfying a voice trigger condition, the semantic feature satisfying a semantic trigger condition, the body movement feature satisfying a body movement trigger condition, and the facial feature satisfying a facial feature trigger condition.

In some embodiments of the present disclosure, in a case where any one of the voice feature satisfying the voice trigger condition, the semantic feature satisfying the semantic trigger condition, the body movement feature satisfying the body movement trigger condition, and the facial feature satisfying the facial feature trigger condition achieves, autonomous update of the polling operation information is directly triggered.

For example, there is an example where a server and at least one video conference terminal collaboratively implement a network conference processing method according to some embodiments of the present disclosure. The at least one video conference terminal may monitor a respective conference scenario to acquire multimedia information, and may send the multimedia information to the server. The server may perform feature extraction on the multimedia information, and acquire feature information. In a case where the server determines that the feature information satisfies a trigger condition, autonomous update of the polling operation information may be directly triggered. The server may control and/or remind a relevant video conference terminal of the at least one video conference terminal based on the autonomously updated polling control information and/or polling reminder information.

In other embodiments of the present disclosure, performing feature extraction on the multimedia information may be implemented by the video conference terminal. In some embodiments of the present disclosure, the performing subject performing feature extraction on the multimedia information may be flexibly chosen based on the computing power of the server and the video conference terminal.

In an achievable scenario, performing feature extraction on the audio information in each venue may be implemented via the following operations: acquiring audio information in each venue during a preset duration; and based on the audio information in each venue, acquiring the voice feature in each venue, such as a voice state. The voice state may include a speaking state, which is a state of valid voice information collected by a video conference terminal at a certain moment or during a certain duration. In a case where the number of the video conference terminals satisfying the speaking state is less than or equal to 1, the polling control information and/or polling reminder information is performed normally. In a case where the number of the video conference terminals satisfying the speaking state is greater than 1, it is determined that the voice feature satisfies the voice trigger condition, and the polling control information and/or polling reminder information is required to be adjusted.

During a video conference, only the participant in one venue speaks, and a normal conference order should be that speaking in all venues alternates. Therefore, in a case where the speaking is simultaneously generated in more than one venue, it indicates that the conference has entered a disordered state, and the polling control information and/or polling reminder information is required to be adjusted and updated. The updated polling control information may be configured to delay for a certain duration before starting a next video conference terminal polling, so as to allow adjustment of the current conference state. In some embodiments, the delay duration may be a fixed duration. In some embodiments, the next video conference terminal polling may be started in a case where the number of video conference terminals satisfying the speaking state is less than or equal to 1. For example, in a case where video conference terminal M and video conference terminal N speak simultaneously, the conference focus on the venues corresponding to these two conference terminals. Therefore, the polling is paused until the number of video conference terminals satisfying the speaking state is less than or equal to 1, and then the polling will be started again. The updated polling reminder information may be adjusted based on the updated polling control information. For example, in a case where speaking is generated simultaneously in video conference terminal M and video conference terminal N, the updated polling reminder information may be sent to video conference terminal M and video conference terminal N to remind these two corresponding venues that adjustment is needed, and polling display pausing may be sent to other venue conference terminals the updated polling reminder information . In a case where the delay duration is a fixed duration, an estimated polling start time may be further displayed, etc.

In some embodiments, the voice state may include a speaking topic state, which is configured to indicate the relevance degree of the speaking content collected by the conference terminal at a certain moment or during a certain duration to the conference topic. The relevance degree between the speaking content and the conference topic may be analyzed based on one or more methods such as semantic analysis and keyword extraction, etc. For example, in a case where the relevance degree is greater than a preset threshold, the polling control information and/or polling reminder information may be performed. In a case where the relevance degree is less than the preset threshold, the speaking content is not related to the conference topic, and the conference is required to be adjusted, so that the polling control information and/or polling reminder information is adjusted and updated.

In an achievable scenario, performing feature extraction on the video information in each venue may be implemented via the following operations: extracting a body movement of the participant in each venue based on the video information in each venue; and determining whether the venue where the participant is located has entered a disordered state based on the body movement and a preset movement threshold. The polling control information and/or polling reminder information for the relevant conference terminal may be adjusted and updated.

The video information may be analyzed via a face recognition technology. In a case where there is no face information in a venue, it is determined that the facial feature satisfies the facial feature trigger condition, and the conference terminal polling corresponding to the venue may be skipped. In a case where there is face information, expression recognition of the participant may be performed on facial image information of the participant, and the venue where the participant with an abnormal facial expression is located may be determined as a venue to be reminded.

During recognizing faces, a face recognition technology in the related art may be configured to determine whether the facial expressions is abnormal, and the face recognition technology may include establishing a facial expression library and recognizing facial expressions. The facial expression library may adopt a facial expression library already established in the related art. The facial expression recognition may include facial image acquisition, image preprocessing, image feature extraction, and classification discrimination. The facial image may be collected via a video terminal equipment. The image preprocessing may involve normalization processing of image size and grayscale. The image feature extraction may adopt extraction of geometric features, statistical features, frequency domain features, and motion features, etc. The image classification discrimination may adopt methods such as linear classifiers, neural network classifiers, support vector machine (SVM) classification algorithms, and Hidden Markov Models (HMM), etc.

In some embodiments of the present disclosure, the polling control information included in the updated polling operation information may include: an activation time of an audio and/or a video of a video conference terminal activating a video conference in a target duration, information of the terminal activating the video conference, a deactivation time of a video conference terminal deactivating the video conference in the target duration, and information of the terminal deactivating the video conference.

In some embodiments of the present disclosure, the polling reminder information included in the updated polling operation information may include: activation reminder information for the video conference terminal activating the video conference in the target duration, and deactivation reminder information for the video conference terminal deactivating the video conference in the target duration.

In some embodiments of the present disclosure, the polling control information may include activation information for video and/or audio of a corresponding video conference terminal, and deactivation information for video and/or audio of other video conference terminals. The activation information and/or deactivation information may include one or a combination of multiple types of information such as corresponding time information and information of the terminal. In some embodiments, based on the polling control information, corresponding polling reminder information may be sent to the corresponding conference terminal. The polling reminder information may include an activation reminder for the video conference terminal that are about activate, and/or a deactivation reminder for other video conference terminals. The reminding method of the polling reminder information may include but is not limited to a vibration reminder, a voice reminder, a text reminder, a fill light reminder, or a combination of one or more thereof. The information of the text reminder may be a text superimposed on the video footage, or may be information displayed in a pop-up dialog box. The information of the text reminder may include one or a combination of multiple types of information such as polling display activation and/or deactivation, and on-site order reminder.

In some embodiments of the present disclosure, the operation 203 of operating a relevant video conference terminal of the at least one video conference terminal based on the updated polling operation information may be implemented via the operations shown in FIG. 6.

An operation 401 may include: acquiring a reminder time.

An operation 402 may include: in a case where the reminder time is the same as an activation time, sending corresponding polling control information and/or polling reminder information to the relevant video conference terminal when the activation time is reached.

An operation 403 may include: in a case where the reminder time is the same as a deactivation time, sending corresponding polling control information and/or polling reminder information to the relevant video conference terminal when the deactivation time is reached.

In some embodiments of the present disclosure, in a case where the reminder time of the polling control information and/or polling reminder information to be sent is the same as the terminal polling activation and/or deactivation time, the conference terminal is reminded in real time to perform polling display.

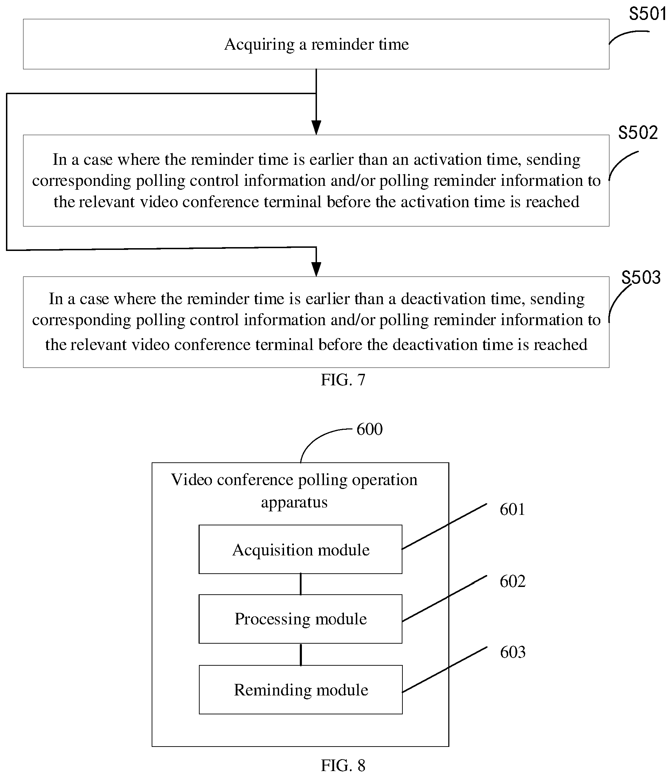

In some embodiments of the present disclosure, the operation 203 of operating a relevant video conference terminal of the at least one video conference terminal based on the updated polling operation information may be implemented via the operations shown in FIG. 7.

An operation 501 may include: acquiring a reminder time.

An operation 502 may include: in a case where the reminder time is earlier than an activation time, sending corresponding polling control information and/or polling reminder information to the relevant video conference terminal before the activation time is reached.

An operation 503 may include: in a case where the reminder time is earlier than a deactivation time, sending corresponding polling control information and/or polling reminder information to the relevant video conference terminal before the deactivation time is reached.

In some embodiments of the present disclosure, in a case where the reminder time of the polling control information and/or polling reminder information to be sent is earlier than the terminal polling activation and/or deactivation time, the corresponding conference terminal is reminded in advance to perform polling display after a certain interval period.

In other embodiments of the present disclosure, in a case where the reminder time is later than the activation time and/or deactivation time, corresponding polling control information and/or polling reminder information will not be sent to the relevant video conference terminal.

From the above content, it may be seen that the video conference polling operation method according to some embodiments of the present disclosure may adaptively adjust conference reminders in polling scenarios. In a case where the venue order becomes chaotic, not only is the chaotic venue reminded, but also autonomous adjustment and update of polling sequence, polling duration and other information is performed for the emergency situation, thereby preparing for polling reminders of other venues and reducing the appearance of more chaotic scenes. In addition, real-time autonomous adjustment of polling settings based on venue information does not affect the conference progress, thereby improving the utilization efficiency of the conference video resource.

Some embodiments of the present disclosure may provide a video conference polling operation apparatus. The video conference polling operation apparatus may perform the video conference polling operation method provided by the embodiment corresponding to FIG. 2. As shown in FIG. 8, the video conference polling operation apparatus 600 may include:
an acquisition module 601, configured to acquire monitoring information for at least one video conference terminal;
a processing module 602, configured to update polling operation information based on the monitoring information; and
a reminding module 603, configured to operate a relevant video conference terminal of the at least one video conference terminal based on the updated polling operation information.

In some embodiments of the present disclosure, the monitoring information may include control information sent by a first video conference terminal of the at least one video conference terminal to a second video conference terminal.

In some embodiments of the present disclosure, the acquisition module 601 may be configured to: in a case where prompt information displayed on a display interface of a first video conference terminal is selected, acquire control information sent by the first video conference terminal to a second video conference terminal based on the prompt information. The prompt information may be configured to prompt a conference scenario of the second video conference terminal, and the monitoring information may include the control information.

In some embodiments of the present disclosure, the processing module 602 may be configured to: in a case where an information type of the control information belongs to a preset information type, acquire polling setting information for the at least one video conference terminal; and update the polling operation information base on the polling setting information.

In some embodiments of the present disclosure, the monitoring information may include feature information acquired by the at least one video conference terminal monitoring a respective conference scenario.

In some embodiments of the present disclosure, the acquisition module 601 may be configured to acquire multimedia information acquired by the at least one video conference terminal monitoring respective conference scenario.

The processing module 602 is configured to perform feature extraction on the multimedia information, and acquire at least one of the following feature information: a voice feature, a semantic feature, a body movement feature, and a facial feature.

In some embodiments of the present disclosure, the processing module 602 is configured to: in a case where the monitoring information satisfies a trigger condition, acquire polling setting information for the at least one video conference terminal; and update the polling operation information based on the polling setting information. The monitoring information satisfying the trigger condition may include at least one of the following: the voice feature satisfying a voice trigger condition, the semantic feature satisfying a semantic trigger condition, the body movement feature satisfying a body movement trigger condition, and the facial feature satisfying a facial feature trigger condition.

In some embodiments of the present disclosure, the polling setting information may include a polling time interval and/or a polling sequence of the at least one video conference terminal.

In some embodiments of the present disclosure, the polling control information included in the updated polling operation information may include: an activation time of an audio and/or a video of a video conference terminal activating a video conference in a target duration, information of the terminal activating the video conference, a deactivation time of a video conference terminal deactivating the video conference in the target duration, and information of the terminal deactivating the video conference.

In some embodiments of the present disclosure, the polling reminder information included in the updated polling operation information may include: activation reminder information for the video conference terminal activating the video conference in the target duration, and deactivation reminder information for the video conference terminal deactivating the video conference in the target duration.

In some embodiments of the present disclosure, the reminding module 603 may be configured to:
acquire a reminder time;
in a case where the reminder time is the same as an activation time, send corresponding polling control information and/or polling reminder information to the relevant video conference terminal when the activation time is reached; or
in a case where the reminder time is the same as a deactivation time, send corresponding polling control information and/or polling reminder information to the relevant video conference terminal when the deactivation time is reached.

In some embodiments of the present disclosure, the reminding module 603 may be configured to:
in a case where the reminder time is earlier than an activation time, send corresponding polling control information and/or polling reminder information to the relevant video conference terminal before the activation time is reached; or
in a case where the reminder time is earlier than a deactivation time, send corresponding polling control information and/or polling reminder information to the relevant video conference terminal before the deactivation time is reached.

The video conference polling operation apparatus according to some embodiments of the present disclosure may be configured to acquire monitoring information for at least one video conference terminal; update polling operation information based on the monitoring information; and operate a relevant video conference terminal of the at least one video conference terminal based on the updated polling operation information. It may be seen that the present disclosure may achieve autonomous update of polling operation information, thereby achieving the purpose of dynamic overall control of video conference polling.

It should be noted that descriptions of the operations and the content in this embodiment the same as other embodiments may refer to the descriptions in other embodiments, and will not be repeated here.

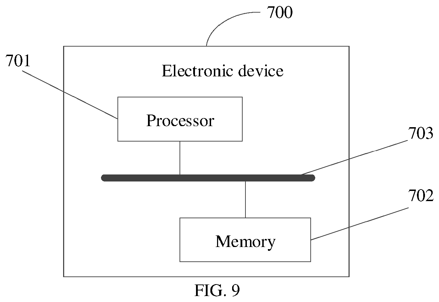

Some embodiments of the present disclosure may provide an electronic device. The electronic device may perform the video conference polling operation method provided by the embodiment corresponding to FIG. 2. As shown in FIG. 9, the electronic device 700 may include: a processor 701, a memory 702, and a communication bus 703. The communication bus 703 may be configured to implement communication connection between the processor 701 and the memory 702.

The processor 701 may be configured to execute a video conference polling operation program stored in the memory 702 to implement the following operations:
acquiring the polling setting information and the monitoring information for at least one video conference terminal;
in a case where the monitoring information satisfies the trigger condition, updating the polling operation information based on the polling setting information to acquire updated polling operation information, and at least one of the polling control information and the polling reminder information included in the polling operation information being different from that included in the updated polling operation information; and
controlling and/or reminding the relevant video conference terminal of the at least one video conference terminal based on the polling control information included in the updated polling operation information and/or the polling reminder information included in the updated polling operation information.

In some embodiments of the present disclosure, the monitoring information may include control information sent by a first video conference terminal of the at least one video conference terminal to a second video conference terminal.

In some embodiments of the present disclosure, the processor 701 may be configured to execute the video conference polling operation program stored in the memory 702 to implement the following operations: in a case where prompt information displayed on a display interface of a first video conference terminal is selected, acquiring control information sent by the first video conference terminal to a second video conference terminal based on the prompt information; the prompt information may be configured to prompt a conference scenario of the second video conference terminal, and the monitoring information may include the control information.

In some embodiments of the present disclosure, the monitoring information satisfying the trigger condition may include that the information type of the control information belongs to the preset information type.

In some embodiments of the present disclosure, the monitoring information may include feature information acquired by the at least one video conference terminal monitoring a respective conference scenario.

In some embodiments of the present disclosure, the processor 701 may be configured to execute the video conference polling operation program stored in the memory 702 to implement the following operations:
acquiring multimedia information acquired by the at least one video conference terminal monitoring a respective conference scenario; and
performing feature extraction on the multimedia information, and acquiring at least one of the following feature information: a voice feature, a semantic feature, a body movement feature, and a facial feature.

In some embodiments of the present disclosure, the monitoring information satisfying the trigger condition may include at least one of the following: the voice feature satisfying a voice trigger condition, the semantic feature satisfying a semantic trigger condition, the body movement feature satisfying a body movement trigger condition, and the facial feature satisfying a facial feature trigger condition.

In some embodiments of the present disclosure, the polling setting information may include a polling time interval and/or a polling sequence of the at least one video conference terminal.

In some embodiments of the present disclosure, the polling control information included in the updated polling operation information may include: an activation time of an audio and/or a video of a video conference terminal activating a video conference in a target duration, information of the terminal activating the video conference, a deactivation time of a video conference terminal deactivating the video conference in the target duration, and information of the terminal deactivating the video conference.

In some embodiments of the present disclosure, the polling reminder information included in the updated polling operation information may include: activation reminder information for the video conference terminal activating the video conference in the target duration, and deactivation reminder information for the video conference terminal deactivating the video conference in the target duration.

In some embodiments of the present disclosure, the processor 701 may be configured to execute the video conference polling operation program stored in the memory 702 to implement the following operations:
acquiring a reminder time;
in a case where the reminder time is the same as an activation time, sending corresponding polling control information and/or polling reminder information to the relevant video conference terminal when the activation time is reached; or
in a case where the reminder time is the same as a deactivation time, sending corresponding polling control information and/or polling reminder information to the relevant video conference terminal when the deactivation time is reached.

In some embodiments of the present disclosure, the processor 701 is configured to execute the video conference polling operation program stored in the memory 702 to implement the following operations:
in a case where the reminder time is earlier than an activation time, sending corresponding polling control information and/or polling reminder information to the relevant video conference terminal before the activation time is reached; or
in a case where the reminder time is earlier than a deactivation time, sending corresponding polling control information and/or polling reminder information to the relevant video conference terminal before the deactivation time is reached.

The processor may be an integrated circuit chip with signal processing capability, such as a general-purpose processor, a digital signal processor (DSP), or other programmable logic device, a discrete gate or transistor logic device, or a discrete hardware component, etc. The general-purpose processor may be a microprocessor or any conventional processor, etc.

It should be noted that descriptions of the operations and the content in this embodiment the same as other embodiments may refer to the descriptions in other embodiments, and will not be repeated here.

Some embodiments of the present disclosure may provide a computer storage medium. The computer storage medium stores one or more programs, and the one or more programs are executable by one or more processors to implement the operations shown in FIG. 2.

It should be noted that descriptions of the operations and the content in this embodiment the same as other embodiments may refer to the descriptions in other embodiments, and will not be repeated here.

It should be noted that the above computer storage medium/memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk, or a compact disc read-only memory (CD-ROM), etc.; or may be various terminals including one or a combination of the above memories, such as a mobile phone, a computer, a tablet device, and a personal digital assistant, etc.

In the several embodiments provided by the present disclosure, it should be understood that the disclosed device and method may be implemented in other ways. The device embodiments described above are merely illustrative. For example, the division of units is merely a logical functional division; in actual implementation, there may be other division manners, such as: multiple units or components may be combined or may be integrated into another system, or some features may be omitted or not executed. In addition, the coupling or direct coupling or communication connection between the various components shown or discussed may be indirect coupling or communication connection via some interfaces, devices or units, and may be electrical, mechanical, or in other forms.

The units described as separate components may or may not be physically separate, and the components displayed as units may or may not be physical units, that is, they may be located in one place, or may be distributed to multiple network units; some or all of the units may be selected according to actual needs to achieve the purpose of the solution of the embodiments.

In addition, the various functional units in the embodiments of the present disclosure may be integrated into one processing module, or each unit may exist separately physically, or two or more units may be integrated into one unit; the above integrated units may be implemented in the form of hardware or in the form of hardware plus software functional units. Those skilled in the art may understand that all or part of the operations for implementing the above method embodiments may be completed by hardware related to program instructions. The aforementioned program may be stored in a computer-readable storage medium. When executed, the program performs the operations including the above method embodiments; and the aforementioned storage medium may include: a mobile storage device, a read-only memory (ROM), a random access memory (RAM), a magnetic disk, or an optical disk, and other various media that may store program code.

The methods disclosed in the several method embodiments provided by the present disclosure may be arbitrarily combined without conflict to acquire new method embodiments.

The features disclosed in the several product embodiments provided by the present disclosure may be arbitrarily combined without conflict to acquire new product embodiments.

The features disclosed in the several method or device embodiments provided by the present disclosure may be arbitrarily combined without conflict to acquire new method embodiments or device embodiments.

The above are only some embodiments of the present disclosure, but the scope of the present disclosure is not limited thereto. Those skilled in the art may easily think of changes or substitutions within the technical scope disclosed by the present disclosure, which should be covered within the scope of the present disclosure. Therefore, the scope of the present disclosure is subject to the scope of the claims.

## Claims

1. A video conference polling operation method, comprising:
acquiring monitoring information for at least one video conference terminal;
in a case where the monitoring information satisfies a trigger condition, updating polling operation information based on polling setting information that has been acquired; wherein the polling setting information comprises a polling time interval and/or a polling sequence of the at least one video conference terminal; and
operating a relevant video conference terminal of the at least one video conference terminal based on the updated polling operation information.

2. The method according to claim 1, wherein the monitoring information comprises control information sent by a first video conference terminal of the at least one video conference terminal to a second video conference terminal.

3. The method according to claim 2, wherein acquiring the monitoring information for the at least one video conference terminal, comprises:
in a case where prompt information displayed on a display interface of the first video conference terminal is selected, acquiring the control information sent by the first video conference terminal to the second video conference terminal based on the prompt information; wherein the prompt information is configured to prompt a conference scenario of the second video conference terminal, and the monitoring information comprises the control information.

4. The method according to claim 2, wherein in the case where the monitoring information satisfies the trigger condition, updating the polling operation information based on the polling setting information that has been acquired, comprises:
in a case where an information type of the control information belongs to a preset information type, acquiring the polling setting information for the at least one video conference terminal; and
updating the polling operation information based on the polling setting information.

5. The method according to claim 1, wherein the monitoring information comprises feature information acquired by the at least one video conference terminal monitoring a respective conference scenario.

6. The method according to claim 5, wherein acquiring the monitoring information for the at least one video conference terminal, comprises:
acquiring multimedia information acquired by the at least one video conference terminal monitoring the respective conference scenario; and
performing feature extraction on the multimedia information, and acquiring at least one of a voice feature, a semantic feature, a body movement feature, and a facial feature.

7. The method according to claim 6, wherein in the case where the monitoring information satisfies the trigger condition, updating the polling operation information based on the polling setting information that has been acquired, comprises:
in a case where the monitoring information satisfies the trigger condition, acquiring the polling setting information for the at least one video conference terminal; and
updating the polling operation information based on the polling setting information;
wherein the monitoring information satisfying the trigger condition comprises at least one of: the voice feature satisfying a voice trigger condition, the semantic feature satisfying a semantic trigger condition, the body movement feature satisfying a body movement trigger condition, and the facial feature satisfying a facial feature trigger condition.

8. The method according to any one of claims 1-7, wherein polling control information comprised in the updated polling operation information comprises: an activation time of an audio and/or a video of a video conference terminal activating a video conference in a target duration, information of a terminal activating the video conference, a deactivation time of a video conference terminal deactivating the video conference in the target duration, and information of a terminal deactivating the video conference; and/or
polling reminder information comprised in the updated polling operation information comprises: activation reminder information for the video conference terminal activating the video conference in the target duration, and deactivation reminder information for the video conference terminal deactivating the video conference in the target duration.

9. The method according to claim 8, wherein operating the relevant video conference terminal of the at least one video conference terminal based on the updated polling operation information, comprises:
acquiring a reminder time;
in a case where the reminder time is the same as the activation time, sending corresponding polling control information and/or a corresponding polling reminder information to the relevant video conference terminal when the activation time is reached; or
in a case where the reminder time is the same as the deactivation time, sending corresponding polling control information and/or a corresponding polling reminder information to the relevant video conference terminal when the deactivation time is reached.

10. The method according to claim 9, wherein after acquiring the reminder time, the method further comprises:
in a case where the reminder time is earlier than the activation time, sending the corresponding polling control information and/or the corresponding polling reminder information to the relevant video conference terminal before the activation time is reached; or
in a case where the reminder time is earlier than the deactivation time, sending the corresponding polling control information and/or the corresponding polling reminder information to the relevant video conference terminal before the deactivation time is reached.

11. A video conference polling operation apparatus, comprising:
an acquisition module, configured to: acquire monitoring information for at least one video conference terminal;
a processing module, configured to: in a case where the monitoring information satisfies a trigger condition, update polling operation information based on polling setting information that has been acquired; wherein the polling setting information comprises a polling time interval and/or a polling sequence of the at least one video conference terminal; and
a reminding module, configured to: operate a relevant video conference terminal of the at least one video conference terminal based on the updated polling operation information.

12. An electronic device, comprising a processor and a memory; wherein the memory is configured to store a computer program, the processor is configured to call and run the computer program stored in the memory to perform the video conference polling operation method according to any one of claims 1-10.

13. A storage medium, storing one or more programs; wherein the one or more programs are executable by one or more processors to implement the video conference polling operation method according to any one of claims 1-10.
